(19) **Europäisches Patentamt / European Patent Office / Office européen des brevets**

(11) **EP 3 348 938 B1**

(12) **EUROPEAN PATENT SPECIFICATION**

(45) Date of publication and mention
of the grant of the patent:
**27.11.2019 Bulletin 2019/48**

(21) Application number: **15903525.2**

(22) Date of filing: **07.09.2015**

(51) Int Cl.:
*F25B 49/02* (2006.01)    *F25B 1/00* (2006.01)
*F25B 49/00* (2006.01)    *F25B 9/00* (2006.01)

(86) International application number:
**PCT/JP2015/075311**

(87) International publication number:
**WO 2017/042859 (16.03.2017 Gazette 2017/11)**

(54) **REFRIGERATION CYCLE SYSTEM**

**KÄLTEKREISLAUFSYSTEM**

**SYSTÈME À CYCLE DE RÉFRIGÉRATION**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.07.2018 Bulletin 2018/29**

(73) Proprietor: **Mitsubishi Electric Corporation
Chiyoda-ku
Tokyo 100-8310 (JP)**

(72) Inventors:
• **TACHIBANA, Hiroyuki
Tokyo 100-8310 (JP)**

• **HIROSAKI, Hiroki
Tokyo 100-8310 (JP)**

(74) Representative: **Pfenning, Meinig & Partner mbB
Patent- und Rechtsanwälte
Theresienhöhe 11a
80339 München (DE)**

(56) References cited:
**EP-A1- 1 452 809     WO-A2-2013/119489
JP-A- 2006 112 784     JP-A- 2006 266 536
JP-A- 2008 190 840     JP-A- 2011 085 269
JP-A- 2014 043 962**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

[Technical Field]

The present invention relates to a refrigeration cycle system.

[Background Art]

A refrigeration cycle system having a refrigerant circuit that performs a refrigeration cycle is widely used. There are cases where a refrigerant in the circuit becomes insufficient or is lost due to leakage of the refrigerant in the refrigerant circuit caused by damage to a pipe or the like. When operation is continued in a state in which the refrigerant in the circuit is insufficient or lost, there is a possibility that a compressor is damaged.

In order to prevent a failure caused by the insufficient refrigerant, the refrigeration cycle system having means for detecting the insufficient refrigerant is proposed conventionally. A heat pump device in PTL 1 shown below determines that the refrigerant is in a gas-insufficient state when a state in which an input current value of the compressor is not more than a reference current value continues for a predetermined time period.

A refrigeration cycle device in PTL 2 shown below determines that the refrigerant is insufficient in the case where a difference between a fluid temperature of a radiator outlet and a target temperature is not less than a predetermined value and a circulation amount of a fluid is less than a predetermined value. In addition, the refrigeration cycle device additionally has, as the determination criterion, a condition that a flowing current of the refrigeration cycle device is less than a predetermined value.

A refrigeration cycle device in PTL 3 shown below determines that the refrigerant is insufficient in the case where the difference between the fluid temperature of the radiator outlet and the target temperature is not less than a predetermined value, the circulation amount of the fluid is less than a predetermined value, and the temperature of the refrigerant discharged from the compressor does not reach a target temperature. In addition, the refrigeration cycle device determines that the refrigerant is insufficient in the case where the flowing current of the refrigeration cycle device is less than a predetermined value.

[Citation List]

[Patent Literature]

[PTL 1] Japanese Patent Application Publication No. 2003-222449
[PTL 2] Japanese Patent Application Publication No. 2005-133958

[PTL 3] Japanese Patent Application Publication No. 2008-267761

EP 1 452 809 A1 discloses a refrigerator including a refrigerating cycle including a compressor, a condenser, an expander and an evaporator and filled with a flammable refrigerant, a load detector detecting a change in load of the compressor, and a control device detecting a damage which is a cause for leak of the refrigerant from the refrigerating cycle, based on a detection output of the load detector.

[Summary of Invention]

[Technical Problem]

The above-described conventional art has the following problems. In the case where the temperature of a fluid (e.g., outside air) that exchanges heat with the refrigerant in an evaporator is low, the current value of the compressor is sometimes reduced even when the refrigerant in the circuit is not insufficient. In that case, there is a possibility that an erroneous determination is made in the case of the method in which the current value of the compressor or the refrigeration cycle device is simply compared with the reference value.

In the case of the method in which the determination is made based on the difference between the fluid temperature of the radiator outlet and the target temperature, it is necessary to have a temperature sensor that detects the fluid temperature of the radiator outlet, and hence there are cases where the cost is increased. In addition, in the case where the temperature sensor has failed, there is a possibility that the erroneous determination is made or the insufficient refrigerant cannot be detected. Further, in the case where the target temperature of the radiator outlet is low, even when the refrigerant is insufficient, the difference between the target temperature and the actual fluid temperature of the radiator outlet is sometimes reduced. In that case, there is a possibility that the insufficient refrigerant cannot be detected. In addition, it takes time for the detected fluid temperature to rise depending on an installation position of the temperature sensor. In that case, it takes time to detect the insufficiency or loss of the refrigerant in the circuit, and hence there is a possibility that it is not possible to reliably prevent the damage to the compressor.

The present invention has been made in order to solve the above problems, and an object thereof is to provide a refrigeration cycle system capable of reliably preventing damage to a compressor in a case where a refrigerant is insufficient or lost.

[Solution to Problem]

A refrigeration cycle system of the invention includes: a refrigerant circuit having a compressor configured to compress a refrigerant; means for detecting a compressor current, which is an electric current supplied at least to the compressor; means for acquiring a first detection value, which is a value of the compressor current at a point of time when a first time has elapsed from starting of the compressor; means for acquiring a second detection value, which is a value of the compressor current at a point of time when a second time shorter than the first time has elapsed from the starting of the compressor; and means for stopping the compressor in a case where the first detection value does not exceed a first reference value, and a difference between the first detection value and the second detection value does not exceed a second reference value.

[Advantageous Effects of Invention]

According to the refrigeration cycle system of the present invention, there are provided the means for acquiring the first detection value, which is a value of the compressor current at the point of time when the first time has elapsed from the starting of the compressor, the means for acquiring the second detection value, which is a value of the compressor current at the point of time when the second time shorter than the first time has elapsed from the starting of the compressor, and the means for stopping the compressor in the case where the first detection value does not exceed the first reference value and the difference between the first detection value and the second detection value does not exceed the second reference value, whereby it becomes possible to reliably prevent the damage to the compressor in the case where the refrigerant is insufficient or lost.

[Brief Description of Drawings]

Fig. 1 is a configuration diagram showing a refrigeration cycle system of Embodiment 1.
Fig. 2 is a functional block diagram of the refrigeration cycle system of Embodiment 1.
Fig. 3 is a view showing an example of a hardware configuration of a controller of the refrigeration cycle system of Embodiment 1.
Fig. 4 is a view showing another example of the hardware configuration of the controller of the refrigeration cycle system of Embodiment 1.
Fig. 5 is a time chart showing operations of individual sections in a gas-insufficient state detection process of the refrigeration cycle system of the present embodiment.
Fig. 6 is a graph showing an example of change over time of a compressor current after starting of a compressor.
Fig. 7 is a graph showing an example of change over time of compressor power after the starting of the compressor.
Fig. 8 is a flowchart of a routine executed by the controller of the refrigeration cycle system of Embodiment 1.

[Description of Embodiment]

Hereinbelow, an embodiment will be described with reference to the drawings. Common elements in the respective drawings are designated by the same reference numerals, and the repeated description thereof will be simplified or omitted. In principle, the numbers, dispositions, orientations, shapes, and sizes of devices, apparatuses, and components in the present invention are not limited to the numbers, dispositions, orientations, shapes, and sizes shown in the drawings. In addition, the present invention includes all combinations of, among configurations described in the following embodiment, configurations that can be combined.

Embodiment 1

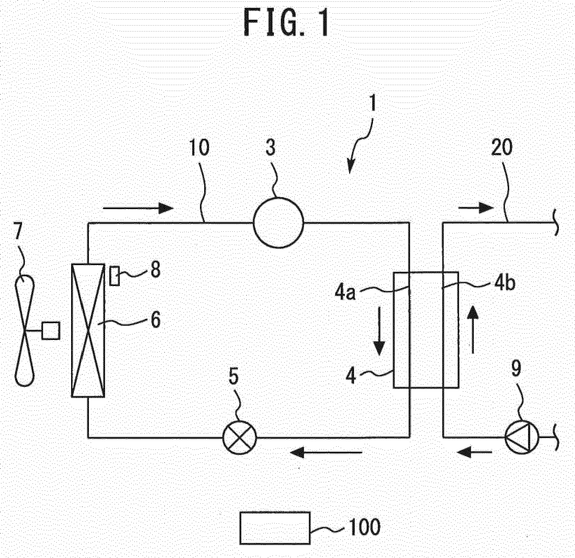

Fig. 1 is a configuration diagram showing a refrigeration cycle system of Embodiment 1. As shown in Fig. 1, a refrigeration cycle system 1 of Embodiment 1 includes a compressor 3, a heat exchanger 4, an expansion valve 5, an evaporator 6, a blower 7, an outside air temperature sensor 8, a circulation pump 9, and a controller 100. The refrigeration cycle system 1 of Embodiment 1 is a heat pump system in which a first fluid is heated in the heat exchanger 4. In Embodiment 1, the first fluid is water. The first fluid in the present invention is not limited to water. The first fluid in the present invention may be a liquid heating medium (brine) such as, e.g., a calcium chloride aqueous solution, an ethylene glycol aqueous solution, or alcohol, or may also be gas.

The compressor 3 compresses a refrigerant gas. The refrigerant is not particularly limited. A refrigerant (e.g., $CO_2$), the high pressure side of which is a supercritical pressure, is preferable. The heat exchanger 4 exchanges heat between a high-pressure refrigerant compressed by the compressor 3 and the first fluid. The heat exchanger 4 has a refrigerant passage 4a and a fluid passage 4b. The compressor 3, the refrigerant passage 4a of the heat exchanger 4, the expansion valve 5, and the evaporator 6 are connected to each other annularly via a refrigerant pipe to form a refrigerant circuit 10. The refrigeration cycle system 1 performs the operation of a refrigeration cycle (heat pump cycle) with the refrigerant circuit 10. In Embodiment 1, the refrigerant and the first fluid in the heat exchanger 4 constitute a countercurrent system.

The expansion valve 5 is an example of a decompression device that decompresses the high-pressure refrigerant having passed through the heat exchanger 4. The opening of the expansion valve 5 is variable. The high-pressure refrigerant passes through the expansion valve 5 to thereby become a low-pressure refrigerant in a gas-liquid two-phase state. The evaporator 6 evaporates the low-pressure refrigerant in the gas-liquid two-phase state. The evaporator 6 is a heat exchanger that exchanges heat between the refrigerant and a second fluid. In Embodiment 1, the second fluid is outdoor air (hereinafter referred to as "outside air"). The evaporator 6 may exchange heat between a fluid other than the outside air (e.g., groundwater, wastewater, or solar heated water) and the refrigerant. A low-pressure refrigerant gas obtained by the evaporation in the evaporator 6 is sucked into the compressor 3.

The blower 7 blows air such that the outside air is supplied to the evaporator 6. The blower 7 blows air from the right to the left in Fig. 1. The outside air passes through the evaporator 6 and the blower 7 in this order. The blower 7 is an example of a second fluid actuator that supplies the second fluid that exchanges heat with the refrigerant in the evaporator 6 to the evaporator 6. In the case where the second fluid is a liquid, it is possible to use a pump that sends out the liquid as the second fluid actuator. The outside air temperature sensor 8 detects the temperature of the outside air supplied to the evaporator 6. The outside air temperature sensor 8 is an example of means for detecting the temperature of the second fluid supplied to the evaporator 6.

The fluid passage 4b of the heat exchanger 4 and the circulation pump 9 are connected to each other via a pipe to form a fluid circuit 20. The circulation pump 9 circulates the first fluid (water in Embodiment 1) in the fluid circuit 20. The circulation pump 9 is an example of a first fluid actuator that supplies the first fluid to the heat exchanger 4. The fluid circuit 20 may be connected to a heat storage tank (not shown) that stores the first fluid (hot water) heated in the heat exchanger 4. The fluid circuit 20 may be connected to an indoor-heating appliance (not shown) that performs indoor-heating using the first fluid heated in the heat exchanger 4. Examples of the indoor-heating appliance include a floor heating panel, a radiator, a panel heater, and a fan convector. The fluid circuit 20 may be connected to another heat exchanger (not shown) that exchanges heat between the first fluid heated in the heat exchanger 4 and another heating medium (e.g., water).

The compressor 3, the heat exchanger 4, the expansion valve 5, the evaporator 6, the blower 7, and the outside air temperature sensor 8 may also be housed in one case (not shown). The circulation pump 9 may be housed in the case, or may also be housed in another case (e.g., a case that houses the heat storage tank).

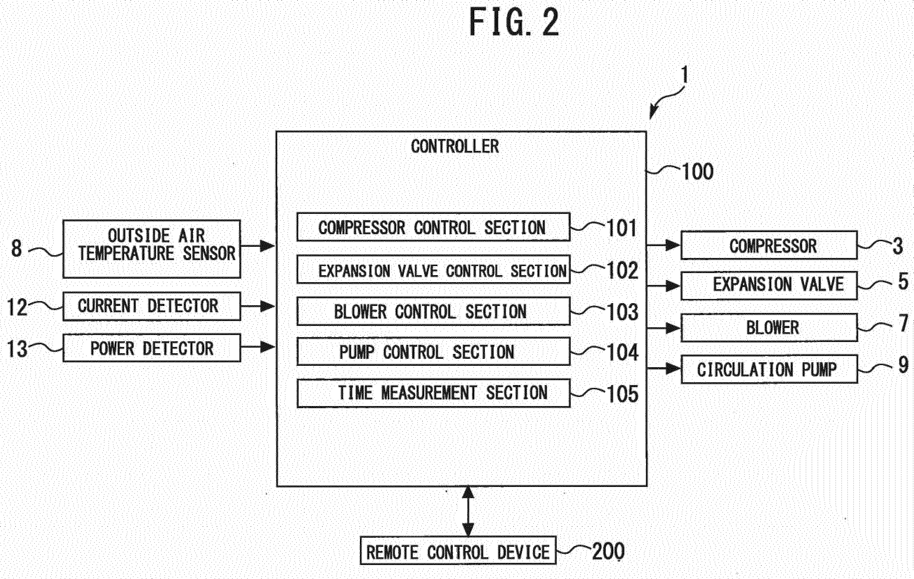

Fig. 2 is a functional block diagram of the refrigeration cycle system 1 of Embodiment 1. As shown in Fig. 2, the refrigeration cycle system 1 further includes a current detector 12, a power detector 13, and a remote control device 200. The controller 100 includes a compressor control section 101, an expansion valve control section 102, a blower control section 103, a pump control section 104, and a time measurement section 105. The compressor 3, the expansion valve 5, the blower 7, the outside air temperature sensor 8, the circulation pump 9, the current detector 12, and the power detector 13 are electrically connected to the controller 100. The controller 100 controls the operation of the refrigeration cycle system 1.

The compressor control section 101 controls the operation of the compressor 3. The operating speed of the compressor 3 is variable. For example, the compressor control section 101 can make the operating speed of the compressor 3 variable by making the operating frequency of a motor of the compressor 3 variable using inverter control. The expansion valve control section 102 controls the opening of the expansion valve 5.

The blower control section 103 controls the operation of the blower 7. The operating speed of the blower 7 is variable. For example, the blower control section 103 can make the operating speed of the blower 7 variable by making the operating frequency of a motor of the blower 7 variable using the inverter control.

The pump control section 104 controls the operation of the circulation pump 9. The pump control section 104 can control the circulation flow rate of the first fluid (water) in the fluid circuit 20 by controlling the operating speed of the circulation pump 9. The time measurement section 105 measures time.

The current detector 12 detects a compressor current. The compressor current is an electrical current supplied at least to the compressor 3. The value of the compressor current detected by the current detector 12 serves as an index of a value of an electrical current flowing to the compressor 3. The current detector 12 may detect an electrical current supplied only to the compressor 3 as the compressor current. The electrical current supplied to the compressor 3 occupies the majority of the electrical current supplied to the entire refrigeration cycle system 1. Accordingly, the current detector 12 may detect an electrical current including an electrical current supplied to other equipment (the blower 7, the circulation pump 9, and the like) of the refrigeration cycle system 1 in addition to the current supplied to the compressor 3 as the compressor current. In addition, the current detector 12 may detect the current supplied to the entire refrigeration cycle system 1 as the compressor current. In the case of alternating current, the current detector 12 may detect an effective value of the current as the compressor current.

The power detector 13 detects compressor power. The compressor power is electrical power consumed at least by the compressor 3. The value of the compressor power detected by the power detector 13 serves as an index of a value of an electrical power consumed by the compressor 3. The power detector 13 may detect electrical power consumed only by the compressor 3 as the compressor power. The electrical power consumed by the compressor 3 occupies the majority of the electrical power consumed by the entire refrigeration cycle system 1. Accordingly, the power detector 13 may detect electrical power including electrical power consumed by other equipment (the blower 7, the circulation pump 9, and the like) of the refrigeration cycle system 1 in addition to the electrical power consumed by the compressor 3 as the compressor power. In addition, the power detector 13 may detect electrical power consumed by the entire refrigeration cycle system 1 as the compressor power. In the case of alternating current, the power detector 13 may detect active power as the compressor power.

The remote control device 200 includes an operation section such as a switch that is operated by a user, and a display section that displays information on the state of the refrigeration cycle system 1 or the like. The remote control device 200 is connected to the controller 100 so as to be capable of interactive data communication. The communication between the controller 100 and the remote control device 200 may be wired or wireless communication.

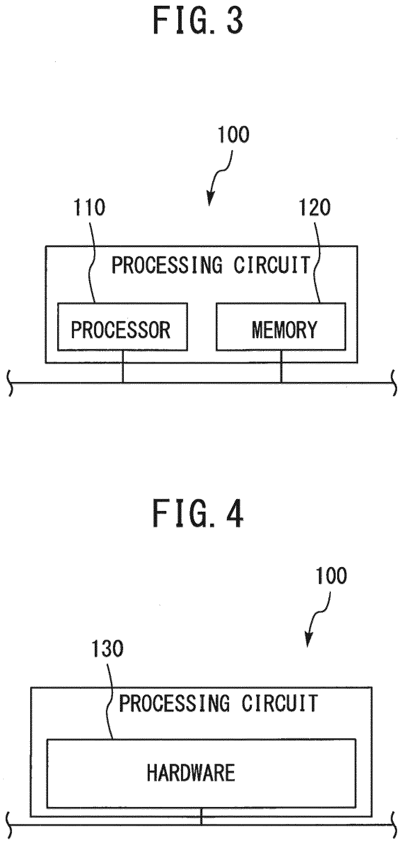

The individual functions of the controller 100 are implemented by a processing circuit. Fig. 3 is a view showing an example of the hardware configuration of the controller 100 of the refrigeration cycle system 1 of Embodiment 1. In the example shown in Fig. 3, the processing circuit of the controller 100 includes at least one processor 110 and at least one memory 120.

In the case where the processing circuit includes at least one processor 110 and at least one memory 120, the individual functions of the controller 100 are implemented by software, firmware, or a combination of the software and the firmware. At least one of the software and the firmware is described as a program. At least one of the software and the firmware is stored in at least one memory 120. At least one processor 110 implements the individual functions of the controller 100 by reading and executing a program stored in at least one memory 120. At least one processor 110 is also referred to as a CPU (Central Processing Unit), a central processor, a processing unit, an arithmetic unit, a microprocessor, a microcomputer, or a DSP. At least one memory 120 is, e.g., a non-volatile or volatile semiconductor memory such as a RAM, a ROM, a flash memory, an EPROM, or an EEPROM, a magnetic disk, a flexible disk, an optical disk, a compact disk, a minidisc, or a DVD.

Fig. 4 is a view showing another example of the hardware configuration of the controller 100 of the refrigeration cycle system 1 of Embodiment 1. In the example shown in Fig. 4, the processing circuit of the controller 100 includes at least one dedicated hardware 130.

In the case where the processing circuit includes at least one dedicated hardware 130, the processing circuit is, e.g., a single circuit, a composite circuit, a programmed processor, a parallel-programmed processor, an ASIC, a FPGA, or a combination thereof. Each of the functions of the individual sections of the controller 100 may be implemented by the processing circuit. The functions of the individual sections of the controller 100 may be collectively implemented by the processing circuit.

In addition, with regard to the individual functions of the controller 100, part thereof may be implemented by the dedicated hardware 130, and the other part thereof may be implemented by software or firmware. Thus, the processing circuit implements the individual functions of the controller 100 with the hardware 130, the software, the firmware, or a combination thereof.

In the case where damage or the like has occurred in the pipe of the refrigerant circuit 10, the refrigerant gas in the refrigerant circuit 10 sometimes leaks. As a result, there are cases where the total amount of the refrigerant in the refrigerant circuit 10 becomes insufficient or the refrigerant is lost. When the compressor 3 is continuously operated in a state in which the refrigerant in the refrigerant circuit 10 is insufficient or lost, there is a possibility that the compressor 3 is damaged. In the following description, the state in which the refrigerant in the refrigerant circuit 10 is insufficient or lost (abnormal state) is referred to as a "gas-insufficient state". A state in which the refrigerant in the refrigerant circuit 10 is sufficient (normal state) is referred to as a "gas-sufficient state".

In the refrigeration cycle system 1 of the present embodiment, after the compressor 3 is started, it is determined whether the refrigerant is in the gas-insufficient state or the gas-sufficient state. Hereinafter, this process is referred to as a "gas-insufficient state detection process". In the case where it is determined that the refrigerant is in the gas-insufficient state in the gas-insufficient state detection process, the compressor 3 is stopped in order to prevent damage to the compressor 3.

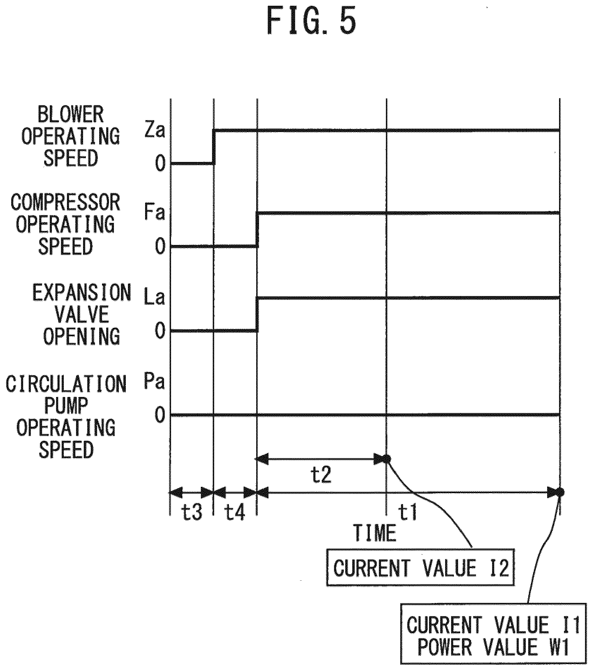

Fig. 5 is a time chart showing the operations of the individual sections in the gas-insufficient state detection process of the refrigeration cycle system 1 of the present embodiment. As shown in Fig. 5, when the compressor 3 is started, the controller 100 causes the individual sections to operate in the following manner.

(1) After a lapse of a time t3 from the receipt of an instruction that requests starting of the compressor 3 by the controller 100, the blower control section 103 starts the blower 7. At this point, the compressor 3 and the circulation pump 9 are not yet started.

(2) After the start of the operation of the blower 7, the outside air temperature is detected by the outside air temperature sensor 8. At this point, the outside air is taken in by the blower 7, and the precise outside air temperature can be thereby detected.

(3) After a lapse of a time t4 from the starting of the blower 7, the compressor control section 101 starts the compressor 3. At this point, the circulation pump 9 is not yet started.

(4) After the start of the operation of the compressor 3, the controller 100 acquires the value of the compressor current detected by the current detector 12 and the value of the compressor power detected by the power detector 13.

(5) The controller 100 stores the value of the compressor current at a point of time when a first time (time t1) has elapsed from the starting of the compressor 3. This value is referred to as a first detection value I1.

(6) The controller 100 stores the value of the compressor current at a point of time when a second time (time t2) has elapsed from the starting of the compressor 3. This value is referred to as a second detection value I2.

(7) The controller 100 stores the value of the compressor power at a point of time when a third time (time t1) has elapsed from the starting of the compressor 3. This value is referred to as a third detection value W1.

The length of the second time (time t2) is different from the length of the first time (time t1). In the present embodiment, the first time (time t1) is longer than the second time (time t2). In the present embodiment, the length of the third time is equal to the length of the first time. The length of the third time may also be different from the length of the first time.

The gas-insufficient state detection process is ended at the point of time when the time t1 has elapsed from the starting of the compressor 3. As shown in Fig. 5, it is preferable for the compressor control section 101 to maintain the operating speed of the compressor 3 at a constant value until the first detection value I1, the second detection value I2, and the third detection value W1 are acquired. That is, it is preferable for the compressor control section 101 to maintain the operating speed of the compressor 3 at the constant value until the gas-insufficient state detection process is ended. It is preferable for the expansion valve control section 102 to maintain the opening of the expansion valve 5 at a constant value until the first detection value I1, the second detection value I2, and the third detection value W1 are acquired. That is, it is preferable for the expansion valve control section 102 to maintain the opening of the expansion valve 5 at the constant value until the gas-insufficient state detection process is ended. It is preferable for the blower control section 103 to maintain the operating speed of the blower 7 at a constant value until the first detection value I1, the second detection value I2, and the third detection value W1 are acquired. That is, it is preferable for the blower control section 103 to maintain the operating speed of the blower 7 at the constant value until the gas-insufficient state detection process is ended.

As shown in Fig. 5, during the gas-insufficient state detection process, the circulation pump 9 is kept stopped. That is, the first detection value I1, the second detection value I2, and the third detection value W1 are acquired in a state in which the circulation pump 9 does not operate.

The compressor operating speed, the expansion valve opening, and the blower operating speed after the starting of the compressor 3 (i.e., at the time of the gas-insufficient state detection process) are referred to as an initial compressor speed Fa, an initial expansion valve opening La, and an initial blower speed Za, respectively. It is preferable for the controller 100 to set at least one of the initial compressor speed Fa, the initial expansion valve opening La, the initial blower speed Za, and the length of the time t1 (first time) based on an outside air temperature Ta detected by the outside air temperature sensor 8. Hereinbelow, an example of this setting process will be described.

In the case where the relationship between the outside air temperature Ta and a first reference temperature Ta1 satisfies Ta ≤ Ta1, the values of the initial compressor speed Fa, the initial expansion valve opening La, the initial blower speed Za, and the time t1 are set to Fa1, La1, Za1, and t11, respectively.

In the case where the relationship among the outside air temperature Ta, the first reference temperature Ta1, and a second reference temperature Ta2 satisfies Ta1 < Ta ≤ Ta2, the values of the initial compressor speed Fa, the initial expansion valve opening La, the initial blower speed Za, and the time t1 are set to Fa2, La2, Za2, and t12, respectively. Note that the relationship between the first reference temperature Ta1 and the second reference temperature Ta2 satisfies Ta1 < Ta2.

In the case where the relationship between the outside air temperature Ta and the second reference temperature Ta2 satisfies Ta > Ta2, the values of the initial compressor speed Fa, the initial expansion valve opening La, the initial blower speed Za, and the time t1 are set to Fa3, La3, Za3, and t13, respectively.

In the example described above, the values of the initial compressor speed Fa, the initial expansion valve opening La, the initial blower speed Za, and the time t1 are set according to which one of three temperature zones defined by the first reference temperature Ta1 and the second reference temperature Ta2 the outside air temperature Ta belongs to. In the case where the temperature zones are defined in this manner, the number thereof is not limited to three, and may also be two, or four or more. Alternatively, the values of the initial compressor speed Fa, the initial expansion valve opening La, the initial blower speed Za, and the time t1 may be continuously changed according to the outside air temperature Ta. In the case where the outside air temperature Ta is high and the refrigerant is in the gas-sufficient state, there is a possibility that a load applied to the compressor 3 is increased due to an increase in refrigerant pressure during the execution of the gas-insufficient state detection process. It is possible to prevent the increase in the load applied to the compressor 3 more reliably in that case by performing the setting process that satisfies at least one of the following conditions. That is, when the outside air temperature Ta is high, the initial compressor speed Fa may be made lower than that when the outside air temperature Ta is low. When the outside air temperature Ta is high, the initial expansion valve opening La may be made larger than that when the outside air temperature Ta is low. When the outside air temperature Ta is high, the length of the time t1 (first time) may be made shorter than that when the outside air temperature Ta is low. When the outside air temperature Ta is high, the initial blower speed Za may be made lower than that when the outside air temperature Ta is low.

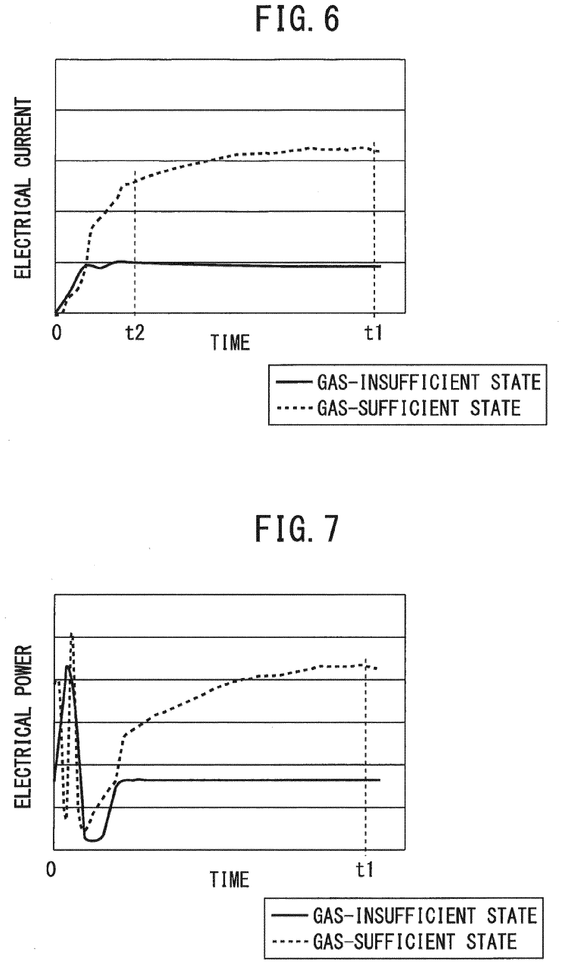

Fig. 6 is a graph showing an example of change over time of the compressor current after the starting of the compressor 3. Fig. 6 is a graph under a given outside air temperature condition. The graph of the solid line indicates the case of the gas-insufficient state. The graph of the broken line indicates the case of the gas-sufficient state. These graphs are graphs obtained when the operation is performed with the compressor operating speed and the expansion valve opening maintained at constant values.

As shown in Fig. 6, in the case of the gas-sufficient state, the change of the compressor current after the starting of the compressor 3 has a time period in which the compressor current continues to rise gradually over a relatively long time. In the case of the gas-insufficient state, the compressor current stops the rise within a short time after the starting of the compressor 3, and becomes substantially constant thereafter. The compressor current after becoming substantially constant in the case of the gas-insufficient state is lower than the compressor current in the case of the gas-sufficient state.

It is preferable for the time t1 (first time) and the time t2 (second time) to be set to be longer than the time from the starting of the compressor 3 until the rise of the compressor current stops in the case of the gas-insufficient state. Alternatively, it is preferable for the time t1 (first time) and the time t2 (second time) to be set to be longer than the time from the starting of the compressor 3 until the compressor current becomes substantially constant in the case of the gas-insufficient state.

It is preferable for a difference between the time t1 (first time) and the time t2 (second time) to be set such that the increase of the compressor current during the time difference is sufficiently large in the case of the gas-sufficient state.

The controller 100 determines that the refrigerant is in the gas-insufficient state in the case where the first detection value I1 does not exceed a first reference value Iα and the difference between the first detection value I1 and the second detection value 12 does not exceed a second reference value Iβ.

In the case where it is determined that the refrigerant is in the gas-insufficient state, the compressor control section 101 stops the compressor 3. That is, the compressor control section 101 stops the compressor 3 in the case where the following two expressions hold.

$$ I1 \leq I\alpha \dots (1) $$

$$ I1 - I2 \leq I\beta \dots (2) $$

Note that the following expression may also be used instead of the above expression (2).

$$ | I1 - I2 | \leq I\beta \dots (3) $$

As can be seen from Fig. 6, in the case of the gas-insufficient state, the first detection value I1 (the value of the compressor current at the point of time when the time t1 has elapsed from the starting of the compressor 3) tends to be lower than that in the case of the gas-sufficient state. Accordingly, by comparing the first detection value I1 with the first reference value Iα, it is possible to determine whether the refrigerant is in the gas-insufficient state or the gas-sufficient state accurately.

In addition, as can be seen from the drawing, in the case of the gas-sufficient state, the difference between the first detection value I1 (the value of the compressor current at the point of time when the time t1 has elapsed from the starting of the compressor 3) and the second detection value 12 (the value of the compressor current at the point of time when the time t2 has elapsed from the starting of the compressor 3) is relatively large. In contrast to this, in the case of the gas-insufficient state, the difference between the first detection value I1 (the value of the compressor current at the point of time when the time t1 has elapsed from the starting of the compressor 3) and the second detection value 12 (the value of the compressor current at the point of time when the time t2 has elapsed from the starting of the compressor 3) is relatively small. Accordingly, by comparing the difference between the first detection value I1 and the second detection value 12 with the second reference value Iβ, it is possible to determine whether the refrigerant is in the gas-insufficient state or the gas-sufficient state accurately.

In the case where the temperature of the second fluid (the outside air in the present embodiment) that exchanges heat with the refrigerant in the evaporator 6 is low, there are cases where the compressor current value becomes small even when the refrigerant in the refrigerant circuit 10 is not insufficient. Accordingly, there is a possibility that an erroneous determination is made only with the method in which the compressor current value is simply compared with the reference value. In contrast to this, according to the present invention, it is possible to reliably prevent such an erroneous determination by using the method of the above expression (2) or the above expression (3) in combination therewith.

As described above, in the present embodiment, the time t1 (first time) is longer than the time t2 (second time). That is, the point of time when the first detection value I1 is acquired is later than the point of time when the second detection value 12 is acquired. With this, the following effects are obtained. In the case of the gas-sufficient state, the first detection value I1 that is compared with the first reference value Iα in the above expression (1) is larger than the second detection value 12. Accordingly, in the case of the gas-sufficient state, it is possible to prevent the above expression (1) from holding more reliably. Therefore, when the actual state is the gas-sufficient state, it is possible to prevent the erroneous determination that the refrigerant is in the gas-insufficient state more reliably.

As shown in Fig. 6, it is preferable for the point of time when the second detection value 12 is acquired (t2) to correspond to the point of time that belongs to the initial stage of the gradual rise of the compressor current in the case of the gas-sufficient state. It is preferable for the point of time when the first detection value I1 is acquired (t1) to correspond to the point of time that belongs to the final stage of the gradual rise of the compressor current in the case of the gas-sufficient state. With this, in the case of the gas-sufficient state, it is possible to reliably prevent the above expression (2) or the above expression (3) from holding. Therefore, when the actual state is the gas-sufficient state, it is possible to prevent the erroneous determination that the refrigerant is in the gas-insufficient state more reliably.

Fig. 7 is a graph showing an example of change over time of the compressor power after the starting of the compressor 3. Fig. 7 is a graph under a given outside air temperature condition. The graph of the solid line indicates the case of the gas-insufficient state. The graph of the broken line indicates the case of the gas-sufficient state. These graphs are graphs obtained when the operation is performed with the compressor operating speed and the expansion valve opening maintained at constant values.

As shown in Fig. 7, in the case of the gas-sufficient state, the change of the compressor power after the starting of the compressor 3 has a time period immediately after the starting in which the compressor power sharply fluctuates, and a time period in which the compressor power continues to rise gradually over a relatively long time thereafter. In the case of the gas-insufficient state, the change of the compressor power after the starting of the compressor 3 has a time period immediately after the starting in which the compressor power sharply fluctuates, and a time period in which the compressor power becomes substantially constant thereafter. The compressor power after becoming substantially constant in the case of the gas-insufficient state is lower than the compressor power in the case of the gas-sufficient state.

The third detection value W1 is the value of the compressor power at the point of time when the third time has elapsed from the starting of the compressor 3. In the present embodiment, the third time is equal to the first time (t1). That is, the point of time when the third detection value W1 is acquired is equal to the point of time when the first detection value I1 is acquired. The configuration is not limited to the above configuration, and the point of time when the third detection value W1 is acquired may also be different from the point of time when the first detection value I1 is acquired. It is preferable for the third time for the acquisition of the third detection value W1 to be set to be longer than the time from the starting of the compressor 3 until the compressor power becomes substantially constant in the case of the gas-insufficient state. In addition, it is preferable for the point of time when the third detection value W1 is acquired to correspond to the point of time that belongs to the final stage of the gradual rise of the compressor power in the case of the gas-sufficient state.

In the case where the third detection value W1 (the value of the compressor power at the point of time when the third time (t1) has elapsed from the starting of the compressor 3) does not exceed a third reference value $W\gamma$, the controller 100 determines that the refrigerant is in the gas-insufficient state.

In the case where it is determined that the refrigerant is in the gas-insufficient state, the compressor control section 101 stops the compressor 3. That is, the compressor control section 101 stops the compressor 3 in the case where the following expression holds.

$$W1 \leq W\gamma \ldots (4)$$

As can be seen from Fig. 7, in the case of the gas-insufficient state, the third detection value W1 (the value of the compressor power at the point of time when the third time (t1) has elapsed from the starting of the compressor 3) tends to be lower than that in the case of the gas-sufficient state. Accordingly, by comparing the third detection value W1 with the third reference value Wy, it is possible to determine whether the refrigerant is in the gas-insufficient state or the gas-sufficient state accurately.

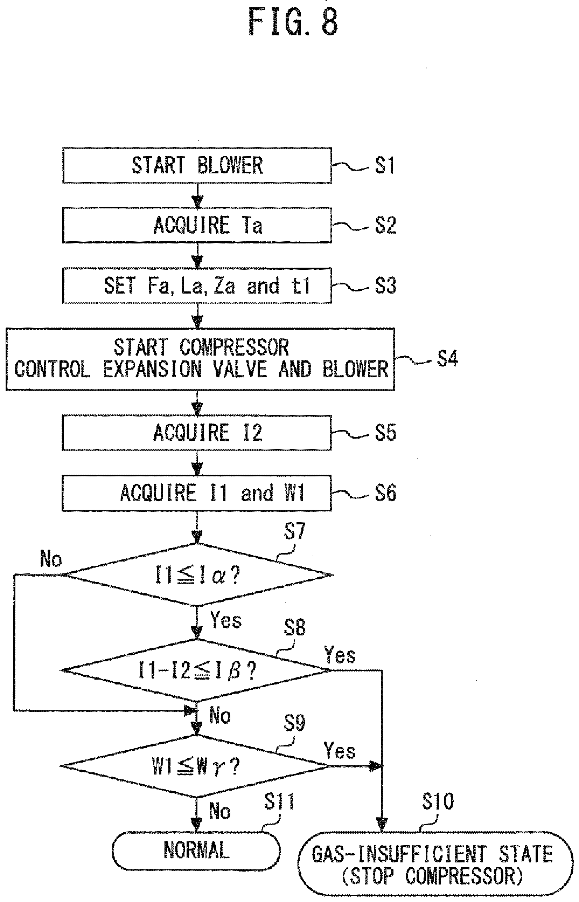

Fig. 8 is a flowchart of a routine executed by the controller 100 of the refrigeration cycle system 1 of Embodiment 1. The routine in Fig. 8 is a routine when the gas-insufficient state detection process is performed. The controller 100 executes the routine in Fig. 8 in the case where the controller 100 receives the instruction that requests the starting of the compressor 3 when the compressor 3 is stopped. In Step S1, after the lapse of the time t3 from the receipt of the instruction, the blower control section 103 starts the blower 7. At this point, the compressor 3 and the circulation pump 9 are not yet started.

The routine transitions from Step S1 to Step S2. In Step S2, the controller 100 acquires the value of the outside air temperature Ta detected by the outside air temperature sensor 8. The routine transitions from Step S2 to Step S3. In Step S3, the controller 100 sets the initial compressor speed Fa, the initial expansion valve opening La, the initial blower speed Za, and the length of the time t1 based on the outside air temperature Ta detected by the outside air temperature sensor 8.

The routine transitions from Step S3 to Step S4. In Step S4, after the lapse of the time t4 from the starting of the blower 7, the compressor control section 101 starts the compressor 3. At this point, the circulation pump 9 is not yet started. In Step S4, the following control is further performed. The compressor control section 101 controls the compressor 3 such that the initial compressor speed Fa set in Step S3 is attained. The expansion valve control section 102 controls the expansion valve 5 such that the initial expansion valve opening La set in Step S3 is attained. The blower control section 103 controls the blower 7 such that the initial blower speed Za set in Step S3 is attained.

The routine transitions from Step S4 to Step S5. In Step S5, the controller 100 stores the value of the compressor current (second detection value 12) at the point of time when the second time (time t2) has elapsed from the starting of the compressor 3.

The routine transitions from Step S5 to Step S6. In Step S6, the controller 100 stores the value of the compressor current (first detection value I1) at the point of time when the first time has elapsed from the starting of the compressor 3, and the value of the compressor power (third detection value W1) at the point of time when the third time has elapsed from the starting of the compressor 3. Each of the first time and the third time corresponds to the time t1 set in Step S3.

The routine transitions from Step S6 to Step S7. In Step S7, the controller 100 compares the first detection value I1 acquired in Step S6 with the first reference value I$\alpha$. In the case where I1 $\leq$ I$\alpha$ holds, the routine transitions to Step S8. In the case where I1 $\leq$ I$\alpha$ does not hold, the routine transitions to Step S9.

In Step S8, the controller 100 compares the difference between the first detection value I1 acquired in Step S6 and the second detection value 12 acquired in Step S5 with the second reference value I$\beta$. In the case where I1 - 12 $\leq$ I$\beta$ holds, the routine transitions to Step S10. In Step S10, the compressor control section 101 stops the compressor 3. In the case where the routine has transitioned to Step S10, the transition corresponds to the determination that the refrigerant is in the gas-insufficient state. According to the present embodiment, when the refrigerant is in the gas-insufficient state, by stopping the compressor 3 in Step S10, it is possible to prevent the operation of the compressor 3 from being continued. Accordingly, it is possible to reliably prevent the damage to the compressor 3.

In Step S9, the controller 100 compares the third detection value W1 acquired in Step S6 with the third reference value W$\gamma$. In the case where W1 $\leq$ W$\gamma$ holds, the routine transitions to Step S10. In Step S10, the compressor control section 101 stops the compressor 3. In the case where the routine has transitioned to Step S10, the transition corresponds to the determination that the refrigerant is in the gas-insufficient state.

In the case where W1 $\leq$ W$\gamma$ does not hold in Step S9, the routine transitions to Step S11. In the case where the routine has transitioned to Step S11, the transition corresponds to the determination that the refrigerant is in the gas-sufficient state (normal). In the case where it is determined that the refrigerant is in the gas-sufficient state (normal), the controller 100 may continue the operation of the compressor 3 and also shift the refrigeration cycle system 1 to a normal operation.

According to the present embodiment, it is possible to perform the gas-insufficient state detection process without using the temperature of the first fluid (water in the present embodiment) heated in the heat exchanger 4. With this, the following effects are obtained.

(1) In the case where the sensor for detecting the temperature of the first fluid heated in the heat exchanger 4 has failed or even in the case where the above sensor is not provided, it is possible to perform the gas-insufficient state detection process.
(2) It is not necessary to wait for the rise of the temperature of the first fluid at the time of the gas-insufficient state detection process, and hence it becomes possible to speedily perform the gas-insufficient state detection process.
(3) In the case where the target temperature of the first fluid that flows out from the heat exchanger 4 is low, i.e., even in the case where a difference in the temperature of the first fluid between the inlet and the outlet of the heat exchanger 4 is small, it becomes possible to perform the gas-insufficient state detection process with high accuracy.

In the present embodiment, in addition to the determination that uses the first detection value I1 and the second detection value 12 as the compressor current values, the determination that uses the third detection value W1 as the compressor power value is performed. With this, the following effects are obtained.

In the case where the operating speed of the compressor 3 is low and the opening of the expansion valve 5 is large, the load of the compressor 3 is reduced. In the case where the load of the compressor 3 is low and the outside air temperature is low, there is a possibility that the compressor current in the normal state is not more than the first reference value I$\alpha$. In such a case, in spite of the fact that the actual state is the gas-sufficient state, there is a possibility that both of I1 $\leq$ I$\alpha$ and I1 - 12 $\leq$ I$\beta$ hold. According to the present embodiment, by performing the determination that uses the third detection value W1 as the compressor power value in addition to the determination that uses the first detection value I1 and the second detection value 12, it is possible to prevent the erroneous determination more reliably even in the case where the load of the compressor 3 is low and the outside air temperature is low.

The load of the compressor 3 is increased by increasing the operating speed of the compressor 3 or reducing the opening of the expansion valve 5. By increasing the load of the compressor 3, it is possible to eliminate the possibility that the compressor current in the normal state is not more than the first reference value Iα. Consequently, in the present invention, the determination may be performed by using only the first detection value I1 and the second detection value 12 as the compressor current values without using the compressor power value.

When the load of the compressor 3 is increased by increasing the operating speed of the compressor 3 or reducing the opening of the expansion valve 5, power consumption is increased. According to the present embodiment, by performing the determination that uses the third detection value W1 as the compressor power value, it is possible to prevent the erroneous determination without increasing the load of the compressor 3. Accordingly, it becomes possible to perform the gas-insufficient state detection process accurately while suppressing the power consumption.

According to the present embodiment, by performing the gas-insufficient state detection process based on the first detection value I1, the second detection value 12, and the third detection value W1 that are acquired in the state in which the circulation pump 9 does not operate, the following effects are obtained. Water is not circulated to the heat exchanger 4, and hence it is possible to prevent the state of the refrigerant from fluctuating in the heat exchanger 4. As a result, it is possible to prevent the fluctuation of the state of the refrigerant in the heat exchanger 4 from influencing the values of the compressor current and the compressor power. Therefore, it is possible to prevent the influence of a disturbance in the gas-insufficient state detection process, and hence it becomes possible to perform the gas-insufficient state detection process with higher accuracy.

According to the present embodiment, by maintaining the operating speed of the compressor 3 at the constant value until the gas-insufficient state detection process is ended, the following effects are obtained. It is possible to prevent the fluctuation of the operating speed of the compressor 3 from influencing the values of the compressor current and the compressor power. Therefore, it is possible to prevent the influence of the disturbance in the gas-insufficient state detection process, and hence it becomes possible to perform the gas-insufficient state detection process with higher accuracy.

According to the present embodiment, by maintaining the opening of the expansion valve 5 at the constant value until the gas-insufficient state detection process is ended, the following effects are obtained. It is possible to prevent the fluctuation of the opening of the expansion valve 5 from influencing the values of the compressor current and the compressor power. Therefore, it is possible to prevent the influence of the disturbance in the gas-insufficient state detection process, and hence it becomes possible to perform the gas-insufficient state detection process with higher accuracy.

According to the present embodiment, by maintaining the operating speed of the blower 7 at the constant value until the gas-insufficient state detection process is ended, the following effects are obtained. It is possible to prevent the state of the refrigerant in the evaporator 6 from fluctuating. It is possible to prevent the fluctuation of the state of the refrigerant in the evaporator 6 from influencing the values of the compressor current and the compressor power. Therefore, it is possible to prevent the influence of the disturbance in the gas-insufficient state detection process, and hence it becomes possible to perform the gas-insufficient state detection process with higher accuracy.

In the present embodiment, it is preferable to set at least one of the initial compressor speed Fa, the initial expansion valve opening La, the initial blower speed Za, and the length of the first time based on the outside air temperature Ta detected by the outside air temperature sensor 8. With this, in the case where the outside air temperature Ta is extremely low or in the case where the outside air temperature Ta is extremely high as well, it is possible to prevent the erroneous determination in the gas-insufficient state detection process more reliably. The length of the second time may be constant irrespective of the outside air temperature Ta.

The present embodiment has described the case where the present invention is applied to the heat pump system used for heating of the first fluid in the heat exchanger. The application of the present invention is not limited to the heat pump system, and the present invention can also be applied to other refrigeration cycle systems (e.g., a refrigeration cycle system for air cooling or cold storage that is used for cooling of the second fluid in the evaporator).

[Reference Signs List]

| | |
|---|---|
| 1 | refrigeration cycle system |
| 3 | compressor |
| 4 | heat exchanger |
| 4a | refrigerant passage |
| 4b | fluid passage |
| 5 | expansion valve |
| 6 | evaporator |
| 7 | blower |
| 8 | outside air temperature sensor |
| 9 | circulation pump |
| 10 | refrigerant circuit |
| 12 | current detector |
| 13 | power detector |
| 20 | fluid circuit |
| 100 | controller |
| 101 | compressor control section |
| 102 | expansion valve control section |
| 103 | blower control section |
| 104 | pump control section |
| 105 | time measurement section |
| 110 | processor |
| 120 | memory |
| 130 | hardware |

200    remote control device

**Claims**

1.   A refrigeration cycle system (1) comprising:

a refrigerant circuit (10) having a compressor (3) configured to compress a refrigerant;
means (12) for detecting a compressor current, which is an electric current supplied at least to the compressor (3);
means (100) for acquiring a first detection value, which is a value of the compressor current at a point of time when a first time has elapsed from starting of the compressor (3);
means (100) for acquiring a second detection value, which is a value of the compressor current at a point of time when a second time shorter than the first time has elapsed from the starting of the compressor (3); and
means (101) for stopping the compressor (3) in a case where the first detection value does not exceed a first reference value, and a difference between the first detection value and the second detection value does not exceed a second reference value.

2.   The refrigeration cycle system (1) according to claim 1, further comprising:

means (13) for detecting compressor power, which is electric power consumed at least by the compressor (3);
means (100) for acquiring a third detection value, which is a value of the compressor power at a point of time when a third time has elapsed from the starting of the compressor (3); and
means (101) for stopping the compressor (3) in a case where the third detection value does not exceed a third reference value.

3.   The refrigeration cycle system (1) according to claim 1 or 2, further comprising:

a heat exchanger (4) configured to exchange heat between the refrigerant compressed by the compressor (3) and a first fluid; and
a first fluid actuator (9) configured to supply the first fluid to the heat exchanger (4), wherein the first detection value and the second detection value are acquired in a state in which the first fluid actuator (9) does not operate.

4.   The refrigeration cycle system (1) according to any one of claims 1 to 3, further comprising:

a decompression device (5) configured to decompress the refrigerant;
an evaporator (6) configured to evaporate the refrigerant;
a second fluid actuator (7) configured to supply to the evaporator (6) a second fluid that exchanges heat with the refrigerant in the evaporator (6); and
means (100) for maintaining at least one of an operating speed of the compressor (3), an opening of the decompression device (5), and an operating speed of the second fluid actuator (7) at a constant value until the first detection value and the second detection value are acquired.

5.   The refrigeration cycle system (1) according to claim 4, further comprising:

means (8) for detecting a temperature of the second fluid supplied to the evaporator (6); and
means (100) for setting, based on the temperature of the second fluid supplied to the evaporator (6), at least one of the operating speed of the compressor (3) after the starting of the compressor (3), the opening of the decompression device (5) after the starting of the compressor (3), the operating speed of the second fluid actuator (7) after the starting of the compressor (3), and a length of the first time.

**Patentansprüche**

1.   Kältekreissystem (1), umfassend:

einen Kältemittelkreislauf (10), aufweisend einen Verdichter (3), der eingerichtet ist, ein Kältemittel zu verdichten;
Mittel (12) zum Erfassen eines Verdichterstroms, der ein elektrischer Strom ist, der zumindest dem Verdichter (3) zugeführt wird;
Mittel (100) zum Erwerben eines ersten Erfassungswertes, der ein Wert des Verdichterstroms zu einem Zeitpunkt ist, wenn eine erste Zeit vom Starten des Verdichters (3) verstrichen ist;
Mittel (100) zum Erwerben eines zweiten Erfassungswertes, der ein Wert des Verdichterstroms zu einem Zeitpunkt ist, wenn eine zweite Zeit, die kürzer als die erste Zeit ist, vom Starten des Verdichters (3) verstrichen ist; und
Mittel (101) zum Stoppen des Verdichters (3) in einem Fall, in dem der erste Erfassungswert nicht einen ersten Referenzwert übersteigt und eine Differenz zwischen dem ersten Erfassungswert und dem zweiten Erfassungswert nicht einen zweiten Referenzwert übersteigt.

2.   Kältekreissystem (1) nach Anspruch 1, ferner umfassend:

Mittel (13) zum Erfassen von Verdichterenergie, die elektrische Energie ist, die zumindest durch den Verdichter (3) verbraucht wird;

Mittel (100) zum Erwerben eines dritten Erfassungswertes, der ein Wert der Verdichterenergie zu einem Zeitpunkt ist, wenn eine dritte Zeit vom Starten des Verdichters (3) verstrichen ist; und

Mittel (101) zum Stoppen des Verdichters (3) in einem Fall, in dem der dritte Erfassungswert nicht einen dritten Referenzwert übersteigt.

**3.** Kältekreissystem (1) nach Anspruch 1 oder 2, ferner umfassend:

einen Wärmetauscher (4), der eingerichtet ist, um Wärme zwischen dem durch den Verdichter (3) verdichteten Kältemittel und einem ersten Fluid auszutauschen; und

einen ersten Fluidaktuator (9), der eingerichtet ist, um dem Wärmetauscher (4) das erste Fluid zuzuführen, wobei

der erste Erfassungswert und der zweite Erfassungswert in einem Zustand erworben werden, in dem der erste Fluidaktuator (9) nicht arbeitet.

**4.** Kältekreissystem (1) nach einem der Ansprüche 1 bis 3, ferner umfassend:

eine Dekompressionseinrichtung (5), die eingerichtet ist, das Kältemittel zu dekomprimieren;

einen Verdampfer (6), der eingerichtet ist, das Kältemittel zu verdampfen;

einen zweiten Fluidaktuator (7), der eingerichtet ist, dem Verdampfer (6) ein zweites Fluid zuzuführen, das Wärme mit dem Kältemittel im Verdampfer (6) austauscht; und

Mittel (100) zum Halten mindestens einer von einer Betriebsdrehzahl des Verdichters (3), einer Öffnung der Dekompressionseinrichtung (5) und einer Betriebsdrehzahl des zweiten Fluidaktuators (7) auf einem konstanten Wert, bis der erste Erfassungswert und der zweite Erfassungswert erworben werden.

**5.** Kältekreissystem (1) nach Anspruch 4, ferner umfassend:

Mittel (8) zum Erfassen einer Temperatur des zweiten Fluids, das dem Verdampfer (6) zugeführt wird; und

Mittel (100) zum Einstellen, auf Grundlage der Temperatur des zweiten Fluids, das dem Verdampfer (6) zugeführt wird, mindestens einer der Betriebsdrehzahl des Verdichters (3) nach dem Starten des Verdichters (3), der Öffnung der Dekompressionseinrichtung (5) nach dem Starten des Verdichters (3), der Betriebsdrehzahl des zweiten Fluidaktuators (7) nach dem Starten des Verdichters (3) und einer Länge der ersten Zeit.

**Revendications**

**1.** Système à cycle de réfrigération (1) comprenant :

un circuit réfrigérant (10) comprenant un compresseur (3) conçu pour comprimer un réfrigérant ;

un moyen (12) pour la détection d'un courant de compresseur, qui est un courant électrique appliqué au moins au compresseur (3) ;

un moyen (100) pour l'acquisition d'une première valeur de détection, qui est une valeur du courant de compresseur à un moment où un premier temps s'est écoulé à partir du démarrage du compresseur (3) ;

un moyen (100) pour l'acquisition d'une deuxième valeur de détection, qui est une valeur du courant de compresseur à un moment où un deuxième temps, plus court, que le premier temps, s'est écoulé à partir du démarrage du compresseur (3) ; et

un moyen (101) pour l'arrêt du compresseur (3) dans le cas où la première valeur de détection ne dépasse par une première valeur de référence et une différence entre la première valeur de détection et la deuxième valeur de détection ne dépasse pas une deuxième valeur de référence.

**2.** Système à cycle de réfrigération (1) selon la revendication 1, comprenant en outre :

un moyen (13) pour la détection d'une puissance de compresseur, qui est la puissance électrique consommée au moins par le compresseur (3) ;

un moyen (100) pour l'acquisition d'une troisième valeur de détection qui est une valeur de la puissance de compresseur à un moment où un troisième temps s'est écoulé à partir du démarrage du compresseur (3) ; et

un moyen (101) pour l'arrêt du compresseur (3) dans le cas où la troisième valeur de détection ne dépasse pas une troisième valeur de référence.

**3.** Système à cycle de réfrigération (1) selon la revendication 1 ou 2, comprenant en outre :

un échangeur thermique (4) conçu pour échanger de la chaleur entre le réfrigérant comprimé par le compresseur (3) et un premier fluide ; et un premier actionneur de fluide (9) conçu pour introduire le premier fluide dans l'échangeur thermique (4),

la première valeur de détection et la deuxième valeur de détection étant acquises dans un état dans lequel le premier actionneur de fluide (9) ne fonctionne pas.

4. Système à cycle de réfrigération (1) selon l'une des revendications 1 à 3, comprenant en outre :

   un dispositif de décompression (5) conçu pour décomprimer le réfrigérant ;
   un évaporateur (6) conçu pour faire évaporer le réfrigérant ;
   un deuxième actionneur de fluide (7) conçu pour introduire dans l'évaporateur (6) un deuxième fluide qui échange de la chaleur avec le réfrigérant dans l'évaporateur (6) ; et
   un moyen (100) pour le maintien d'au moins un élément parmi une vitesse de fonctionnement du compresseur (3), une ouverture du dispositif de décompression (5) et une vitesse de fonctionnement du deuxième actionneur de fluide (7) à une valeur constante jusqu'à ce que la première valeur de détection et la deuxième valeur de détection soient acquises.

5. Système à cycle de réfrigération (1) selon la revendication 4, comprenant en outre :

   un moyen (8) pour la détection d'une température du deuxième fluide introduit dans l'évaporateur (6) ; et
   un moyen (100) pour le réglage, sur la base de la température du deuxième fluide introduite dans l'évaporateur (6), d'au moins un élément parmi la vitesse de fonctionnement du compresseur (3) après le démarrage du compresseur (3), l'ouverture du dispositif de décompression (5) après le démarrage du compresseur (3), la vitesse de fonctionnement du deuxième actionneur de fluide (7) après le démarrage du compresseur (3), et une durée du premier temps.

# FIG. 1

# FIG. 2

CONTROLLER 100 1

- COMPRESSOR CONTROL SECTION 101 → COMPRESSOR 3
- EXPANSION VALVE CONTROL SECTION 102 → EXPANSION VALVE 5
- BLOWER CONTROL SECTION 103 → BLOWER 7
- PUMP CONTROL SECTION 104 → CIRCULATION PUMP 9
- TIME MEASUREMENT SECTION 105

OUTSIDE AIR TEMPERATURE SENSOR 8 →
CURRENT DETECTOR 12 →
POWER DETECTOR 13 →

↔ REMOTE CONTROL DEVICE 200

# FIG. 3

100

110

PROCESSING CIRCUIT

120

PROCESSOR

MEMORY

# FIG. 4

100

130

PROCESSING CIRCUIT

HARDWARE

# FIG. 5

| BLOWER OPERATING SPEED | Za / 0 |
| COMPRESSOR OPERATING SPEED | Fa / 0 |
| EXPANSION VALVE OPENING | La / 0 |
| CIRCULATION PUMP OPERATING SPEED | Pa / 0 |

t2

t3  t4  t1

TIME

CURRENT VALUE I2

CURRENT VALUE I1
POWER VALUE W1

# FIG. 6

GAS-INSUFFICIENT STATE
GAS-SUFFICIENT STATE

# FIG. 7

GAS-INSUFFICIENT STATE
GAS-SUFFICIENT STATE

# FIG. 8

START BLOWER — S1

ACQUIRE Ta — S2

SET Fa, La, Za and t1 — S3

START COMPRESSOR
CONTROL EXPANSION VALVE AND BLOWER — S4

ACQUIRE I2 — S5

ACQUIRE I1 and W1 — S6

S7
$I1 \leqq I\alpha$ ? — No

Yes

S8
$I1-I2 \leqq I\beta$ ? — Yes

No

S9
$W1 \leqq W\gamma$ ? — Yes

No — S11

NORMAL

S10

GAS-INSUFFICIENT STATE
(STOP COMPRESSOR)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003222449 A
- JP 2005133958 A
- JP 2008267761 A
- EP 1452809 A1